# EUROPÄISCHE PATENTSCHRIFT

(11) **EP 2 838 408 B1**
(45) Veröffentlichungstag und Bekanntmachung des Hinweises auf die Patenterteilung: **27.06.2018**
(21) Anmeldenummer: 13718819.9
(22) Anmeldetag: 16.04.2013
(51) Int. Cl.: A47J 43/08, A47J 43/07

(54) **DREISTUFIGES PLANETENGETRIEBE**
THREE-STAGE PLANETARY GEARING
TRANSMISSION À TRAINS ÉPICYCLOÏDAUX À TROIS ÉTAGES

(30) Priorität: 16.04.2012 DE 102012206162
(43) Veröffentlichungstag der Anmeldung: 25.02.2015
(73) Patentinhaber: BSH Hausgeräte GmbH, 81739 München (DE)
(72) Erfinder: BERZELAK, Matej, 3330 Mozirje (SI); PESEC, Jurij, 3301 Petrovce (SI); RUDEZ, Darko, 3230 Sentjur (SI)
(86) Internationale Anmeldenummer: PCT/EP2013/057870
(87) Internationale Veröffentlichungsnummer: WO 2013/156460

(56) Entgegenhaltungen:
- EP-A1- 0 022 465
- EP-A1- 0 880 931
- DE-A1- 3 307 023

## Beschreibung

### Gebiet der Erfindung

Die Erfindung betrifft eine Küchenmaschine mit einem Getriebesystem mit einer antriebsseitigen Eingangswelle, deren Drehmoment über das Getriebesysteme an mehrere abtriebsseitige Ausgangswellen übertragen werden kann und die Verwendung eines Planetengetriebes in Wolfromanordnung in einer Küchenmaschine.

### Hintergrund der Erfindung

Die Offenlegungsschrift DE 197 56 923 A1 offenbart eine Getriebeeinrichtung für den häuslichen Bedarf, bei der ein Planetenrad und ein Hohlrad mehrere Zahnradpaare unterschiedlicher Durchmesser aufweisen und das Hohlrad in Achsrichtung verschiebbar ist, sodass in einer Betriebsstellung die Zahnkränze größeren Durchmessers und in der anderen Betriebsstellung die Zahnkränze kleineren Durchmessers in Zahneingriff gelangen. Dadurch, dass das mindestens eine Planetenrad und das Hohlrad mindestens je zwei Zahnkränze unterschiedlicher Durchmesser aufweisen und das Hohlrad in Achsrichtung verschiebbar ist und dadurch in der einen Betriebsstellung die Zahnkränze des größeren Durchmessers in Eingriff gebracht werden können, während in der anderen oder einer weiteren Stellung die Zahnkränze der anderen, kleineren Durchmesser in Eingriff gebracht werden können, sodass zumindest zwei oder mehrere unterschiedliche Übersetzungsverhältnisse eingerichtet werden können. Bevorzugt sind zwei Zahnradpaare, also zwei wechselbare Getriebestufen. Bevorzugt ist zudem, eine erste Ausgangswelle hülsenförmig in Form einer außen oder innen verzahnten Hülse auszubilden, die die zweite Ausgangswelle, die durch den verlängerten Abschnitt der Eingangswelle gebildet wird, konzentrisch umgibt. Vorzugsweise wird hierbei die zweite Ausgangswelle mit einer axial verlaufenden Verzahnung versehen, sodass auf diese Verzahnung ein entsprechendes Arbeitsteil aufgesteckt werden kann, während die erste Ausgangswelle auf ihrer radial außen liegenden Seite eine Längsverzahnung aufweist, um darauf, ohne mit der Verzahnung der zweiten Ausgangswelle in Wechselwirkung zu treten, ein Antriebsteil aufzustecken.

Aus der Offenlegungsschrift DE 10 2007 011 517 A1 ist ein Küchengerät für den häuslichen Bedarf bekannt, bei dem gleichzeitig am Arbeitswerkzeug und an der Getriebeeinrichtung Mittel ausgebildet sind, durch die beim Aufstecken eines Arbeitswerkzeugs die für das Arbeitswerkzeug richtige Getriebestufe gewählt wird. Es können gleichzeitig zwei Arbeitswerkzeuge eingesetzt werden. Sie können nebeneinander aufgesteckt werden.

Die europäische Patentanmeldung EP 1 719 552 A2 zeigt einen Mischkopf in einer Maschine zum Kneten von Nahrungsmitteln, der bevorzugt vier Werkzeuge zum Bearbeiten von Nahrungsmitteln umfasst. Ein Getriebe versetzt die Mixelemente in Rotation um ihre eigene Achse. Bevorzugt sind diese in gleichen Abständen von 90° voneinander angeordnet.

Die Offenlegungsschrift DE 198 45 182 A1 offenbart ein zweistufiges stegloses Planetengetriebe in Wolfromanordnung. Das Planetenrad bzw. die Planetenräder sind als Stufenplanet bzw. Stufenplaneten ausgebildet und die Stufe, die dem Abtriebsrad zugeordnet ist, wird von einem Hilfsrad abgestützt. Dabei verläuft die Drehachse fluchtend zur Antriebs-/Abtriebsachse.

In der Offenlegungsschrift DE 33 07 023 A1 ist ein Antriebsgerät für Küchenwerkzeuge mit einem als Handgriff ausgebildeten Gehäuse offenbart, wobei ein in dem Gehäuse untergebrachter Antriebsmotor eine zur Handgriff-Längsachse koaxial ausgerichtete Abtriebswelle aufweist. Auf der Abtriebswelle des Motors ist ein Sonnenrad aufgekeilt. Über ein auf einer stationären Achse gelagertes Planetenrad wird ein Hohlradkranz angetrieben, in dessen hohler Nabe eine Antriebswelle drehsicher steckt, die einen Antriebskopf aufweist und als schnell laufende Antriebswelle zum Antrieb hochtouriger Küchenwerkzeuge dient. Auf der schnell laufenden Antriebswelle sitzt ein weiteres Sonnenrad, das über ein weiteres, um eine feststehende Achse drehbares Planetenrad einen weiteren Hohlradkranz antreibt, auf dessen Nabe eine hohle Antriebswelle aufgekeilt ist, die eine Antriebsscheibe aufweist. Die hohle Antriebswelle ist als langsam laufende Antriebswelle zum Antrieb eines Rührbesens vorgesehen.

Gemäß DE 29 28 787 C2 weist eine Küchenmaschinen-Antriebseinheit eine Abtriebswelle auf, deren Abtriebsende als erster Antrieb für ein erstes aufsteckbares Werkzeug ausgebildet ist, und eine zu dieser koaxial angeordnete, mittels eines ersten Untersetzungsgetriebes antreibbare erste Abtriebshülse als zweiter Antrieb für ein zweites einsteckbares Werkzeug. Zwischen der Abtriebswelle und der ersten Abtriebshülse ist eine zweite, mittels eines zweiten Untersetzungsgetriebes antreibbare Abtriebshülse gelagert, die stirnseitig als dritter Abtrieb für ein drittes aufsteckbares Werkzeug ausgebildet ist. Dabei steht ein Doppel-Zahnrad einerseits mit einem Antriebsritzel der Abtriebswelle und andererseits mit der Innenverzahnung der ersten Abtriebshülse in Eingriff, wobei das Doppel-Zahnrad auf einer Zwischenwelle drehbar gelagert ist, deren unteres Ende in einer Bohrung einer Zwischenplatte und deren oberes Ende in einer Bohrung einer unverdrehbar mit einem Gehäuseteil verbundenen Zwischenglocke gelagert ist. Ferner steht ein Zahnkranz der zweiten Abtriebshülse mit dem Doppel-Zahnrad in Eingriff.

Die Offenlegungsschrift DE 10 2009 003 249 A1 offenbart ein Küchengerät mit einem Planetengetriebe, das ein Sonnenrad umfasst sowie mindestens ein Planetenrad, das auf einem Planetenträger angeordnet ist, und ein Hohlrad, das in einem Getriebegehäuse angeordnet ist. Der Planetenträger, der eine Abtriebswelle antreibt, ist auf einem Wälzlager in dem Getriebegehäuse angeordnet, während das Hohlrad drehfest in dem Getriebegehäuse angeordnet ist.

Die europäische Patentanmeldung EP 0 880 931 A1 offenbart eine elektrische Küchenmaschine mit einem Gehäuse, in dem ein Elektromotor mit einer Motorwelle angeordnet ist, die über ein Getriebe zumindest drei konzentrische Abtriebe mit unterschiedlicher Drehzahl antreibt. Dabei weist das Getriebe eine Antriebswelle auf, mit der ein erstes Zahnriemenrad sowie eine erste Kupplungsbuchse verbunden sind. Das erste Zahnriemenrad wird mittels eines Mixerriemens über eine Zwischenwelle angetrieben, die ihrerseits über einen Zwischenwellenriemen von der Motorwelle angetrieben wird. Konzentrisch zum ersten Zahnriemenrad ist ein zweites Zahnriemenrad drehbar gelagert, das mittels eines Zusatzriemens ebenfalls über die Zwischenwelle antreibbar ist. Das zweite Zahnriemenrad ist mit einem Sonnenrad verbunden, das vier erste Planetenzahnräder antreibt, die auf einer ersten Innenverzahnung eines drehfest gelagerten Hohlrads laufen. Der Planetenträger der ersten Planetenzahnräder weist eine Außenverzahnung auf, auf der drei zweite Planetenzahnräder abrollen, die in einem zweiten Planetenträger gelagert sind. Das Sonnenrad und der erste und der zweite Planetenträger sind jeweils mit Kupplungsbuchsen verbunden.

### Der Erfindung zugrundeliegende Aufgabe

Der Erfindung liegt die Aufgabe zugrunde, eine Küchenmaschine mit einem Getriebesystem zu schaffen, die gegenüber dem Stand der Technik verbessert ist und eine neue Verwendung für ein Planetengetriebe in Wolfromanordnung zu finden.

### Erfindungsgemäße Lösung

Die Bezugszeichen in sämtlichen Ansprüchen haben keine einschränkende Wirkung, sondern sollen lediglich deren Lesbarkeit verbessern.

Die der Erfindung zugrunde liegende Aufgabe wird erfindungsgemäß gelöst durch eine Küchenmaschine mit einem Getriebesystem nach Anspruch 1 und eine Verwendung eines Planetengetriebes in Wolfromanordnung nach Anspruch 11. Dadurch, dass eine Küchenmaschine mit einem Getriebesystem nach dem Oberbegriff des Anspruchs 1 am Getriebesystem drei abtriebsseitige Ausgangswellen in koaxialer Geometrie aufweist, kann ein Drehmoment in einer neuartigen Geometrie von der Eingangswelle auf die Ausgangswellen übertragen werden. Das kann den Vorteil haben, dass dem Benutzer der Küchenmaschine drei abtriebsseitige Ausgangswellen für die Verwendung mit Werkzeugen zur Verfügung stehen. Dieser Vorteil kann insbesondere zum Tragen kommen in Küchenmaschinen wie Mixern, Nahrungsmittelverarbeitungsgeräten, Entsaftern und vergleichbaren Geräten zur Speisenzubereitung oder Nahrungsmittelbearbeitung.

Ein Getriebesystem im Sinne der Erfindung ist ein Räderwerk von ineinandergreifenden Zahnrädern, die ein Drehmoment von einer antriebsseitigen Eingangswelle auf eine oder mehrere abtriebsseitige Ausgangswellen übertragen.

Ein anderer Aspekt der Erfindung ist die Verwendung eines Planetengetriebes in Wolfromanordnung in einer Küchenmaschine. Planetengetriebe und Planetengetriebe in Wolfromanordnung sind dem Durchschnittsfachmann grundsätzlich bekannt. Ein Planetengetriebe im Sinne der Erfindung ist ein Über- oder Untersetzungsradwerk, das ein Sonnenrad, ein oder mehrere Planetenräder und ein Hohlrad aufweist. Das Sonnenrad kämmt mit dem einen Planetenrad oder den mehreren Planetenrädern, die wiederum mit dem Hohlrad kämmen. Das Planetengetriebe kann somit ein antriebsseitiges Drehmoment abtriebsseitig über- oder untersetzt bereitstellen.

Ein Wolfromgetriebe ist im Sinne der Erfindung ein solches Planetengetriebe, das ein oder mehrere Stufenräder als Planetenräder umfasst und bei dem ein weiteres Hohlrad abtriebsseitig mit einer Stufe der Planetenräder kämmt und von diesen angetrieben wird.

Durch die Verwendung eines solchen Planetengetriebes in Wolfromanordnung in einer Küchenmaschine kann der Vorteil erreicht werden, dass auf besonders einfache Weise drei Ausgangswellen in koaxialer Geometrie bereitgestellt werden können. Dies kann in besonders einfacher Weise zu den Vorteilen der oben beschriebenen Küchenmaschine führen.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

In einer bevorzugten Ausführungsform ist das Getriebesystem ein Untersetzungsgetriebe. Das kann den Vorteil mit sich bringen, dass über das Getriebesystem abtriebsseitig ein Drehmoment der antriebsseitigen Eingangswelle zur Verfügung gestellt werden kann, das auf Kosten der Rotationsgeschwindigkeit größer ist, als das der Eingangswelle. So kann beispielsweise auch ein Messer, ein Knethaken, ein Besen, ein Metallknethaken oder ein Fleischwolf in einer Küchenmaschine betrieben werden, deren antriebsseitige Eingangswelle hinsichtlich der Drehgeschwindigkeit und des Drehmoments eher nur für Rührbesen geeignet ist. Das Getriebesystem kann aber auch ein Übersetzungsgetriebe sein, bei dem abtriebsseitig eine höhere Rotationsgeschwindigkeit bereitgestellt wird als durch die antriebsseitige Eingangswelle. So können beispielsweise ein Rührer oder ein Schaumschläger betrieben werden, die eventuell eine größere Rotationsgeschwindigkeit als von der Eingangswelle bereitgestellt wird, benötigen.

In einer bevorzugten Ausführungsform weisen die abtriebsseitigen Ausgangswellen jeweils unterschiedliche Untersetzungen auf. Das kann den Vorteil mit sich bringen, dass alternativ in der Küchenmaschine sowohl ein Rührer, ein Knethaken oder ein Fleischwolf zum Einsatz kommen können, die jeweils unterschiedliche Drehmomente und Rotationsgeschwindigkeiten für einen ordnungsgemäßen Betrieb zur Nahrungsmittelbearbeitung benötigen. Zudem kann dies den Vorteil mit sich bringen, dass eine Geschwindigkeitseinstellung am Gerät überflüssig wird. Die Rotationsgeschwindigkeit der antriebsseitigen Eingangswelle muss in diesem Fall nicht länger am Gerät geregelt werden, sondern der Benutzer kann abhängig von der beabsichtigten Bearbeitungsfunktion eine der drei Ausgangswellen mit den unterschiedlichen Geschwindigkeiten wählen, sodass der Bedienkomfort der Küchenmaschine verbessert sein kann. Alternativ können aber auch alle drei Ausgangswellen jeweils die gleiche Untersetzung aufweisen oder auch gar keine Untersetzung aufweisen, sodass über alle drei Ausgangswellen das gleiche Drehmoment übertragen wird und möglicherweise auch ein Drehmoment, das identisch ist mit dem Drehmoment der antriebsseitigen Eingangswelle. So kann man unterschiedliche Werkzeuge mit verwendungsabhängigem Kopplungsdurchmesser an eine jeweils passende Ausgangswelle anbringen und den Werkzeugen unabhängig von der verwendeten Ausgangswelle das jeweils gleiche Drehmoment zur Verfügung stellen.

In einer bevorzugten Ausführungsform stellt das Getriebesystem abtriebsseitig Untersetzungsfaktoren kleiner als 10 und kleiner als 60 im Verhältnis zur Drehzahl der antriebsseitigen Eingangswelle bereit. So kann der Vorteil erreicht werden, dass für die unterschiedlichsten Verwendungsszenarien ein breites Spektrum an Drehmoment und Rotationsgeschwindigkeit zur Verfügung gestellt werden kann. Wird beispielsweise eine antriebsseitige Eingangswelle mit einer Geschwindigkeit von 15300 U/min betrieben, so kann an einer Ausgangswelle eine Umdrehungsgeschwindigkeit von 250 U/min bei stark gesteigertem Drehmoment bereitgestellt werden. An einer anderen Ausgangswelle kann beispielsweise eine Rotationsgeschwindigkeit von 1500 U/min bereitgestellt werden. Dies kann von Vorteil sein, wenn man ein Bearbeitungswerkzeug einsetzen möchte, das ein Drehmoment benötigt, das zwischen dem liegt, was von der antriebsseitigen Eingangswelle mit 15000 U/min und der abtriebsseitigen Ausgangswelle mit 250 U/min bereitgestellt wird. Die genannten Zahlwerte dienen nur der beispielhaften Beschreibung. Für die antriebsseitige Eingangswelle sind beispielsweise auch Geschwindigkeiten von 10000, 21000 oder 30000 U/min möglich. Die Rotationsgeschwindigkeit der Eingangswelle ist somit in jedem Fall bevorzugt kleiner als 40000 U/min, besonders bevorzugt kleiner als 25000 U/min, nochmals besonders bevorzugt kleiner als 15000 U/min und nochmals besonders bevorzugt kleiner als 11000 U/min. Entsprechend ändern sich die Rotationsgeschwindigkeiten der Ausgangswellen und die von ihnen bereitgestellten Drehmomente. In einer bevorzugten Ausführungsform ist ein Untersetzungsfaktor kleiner als 8, in einer besonders bevorzugten Ausführungsform kleiner als 5 und in einer nochmals besonders bevorzugten Ausführungsform kleiner als 3. Ein anderer Untersetzungsfaktor ist bevorzugt kleiner als 100, nochmals bevorzugt kleiner als 80, nochmals bevorzugt kleiner als 65, nochmals bevorzugt kleiner als 40, nochmals bevorzugt kleiner als 30, nochmals bevorzugt kleiner als 20. Durch die genannten Untersetzungsfaktoren kann in der erfindungsgemäßen Küchenmaschine abtriebsseitig ein breites Spektrum an unterschiedlichen Drehmomenten für Werkzeuge zur Verfügung gestellt werden. Der Benutzer kann dadurch den Vorteil haben, dass sich die Küchenmaschine für eine Vielzahl von Bearbeitungsaufgaben eignet.

In einer bevorzugten Ausführungsform sind die abtriebsseitigen Ausgangswellen gleichzeitig betreibbar. Dies kann den Vorteil haben, dass der Benutzer vor Verwendung der Küchenmaschine nicht erst Einstellungen vornehmen muss, um die gewünschte Ausgangswelle zu aktivieren, sondern einfach nur das gewünschte Bearbeitungswerkzeug in die erfindungsgemäße Küchenmaschine einsetzen muss, und daraufhin die Küchenmaschine einschalten kann. Die Bedienung der Küchenmaschine kann also vereinfacht werden und Arbeitsschritte können vorteilhafter Weise entfallen. Besonders bevorzugt ist es, dass die Ausgangswellen gleichzeitig nutzbar sind. Das heißt, dass an allen drei Ausgangswellen zeitgleich Werkzeuge betrieben werden können. So kann beispielsweise ein Rührer gleichzeitig mit einem Messer und einem Metallknethaken verwendet werden. Alle drei Werkzeuge benötigen jeweils ein anderes Drehmoment um optimal funktionieren zu können. Sind alle drei Ausgangswellen gleichzeitig nutzbar, so kann der Benutzer zeitgleich beispielsweise rühren, schneiden und kneten. Vorteil kann also sein, dass die Küchenmaschine mehr Arbeitsschritte in kürzerer Zeit erledigen kann. Alternativ können die Ausgangswellen aber auch getrennt voneinander betreibbar sein. Auch können die Ausgangswellen derart beschaffen sein, dass der Benutzer nur eine der drei Ausgangswellen zur selben Zeit nutzen kann, beispielsweise indem durch das Gehäuse des eingesetzten Werkzeugs die beiden nicht genutzten Ausgangswellen verdeckt werden. Dies kann vorteilhaft sein, um ihn vor Verletzungen zu schützen.

Erfindungsgemäß umfasst das Getriebesystem ein Planetengetriebe. Dieses kann vorteilhaft eine besonders einfache Möglichkeit bieten, ein Drehmoment über das Getriebesystem von einer antriebsseitigen Eingangswelle auf abtriebsseitige Ausgangswellen zu übertragen. Wie bereits beschrieben sind solche Planetengetriebe dem Durchschnittsfachmann grundsätzlich bekannt. Sie können auch vorteilhaft sein, um die voran beschriebenen Untersetzungsfaktoren bereitstellen zu können. Außerdem können Sie eine besonders kompakte Bauweise des Getriebesystems erlauben und können ein besonders hohes Drehmoment von der Eingangswelle an die Ausgangswellen zur Verfügung stellen.

In einer bevorzugten Ausführungsform sind die Planetenräder Stufenräder. Stufenräder zeichnen sich dadurch aus, dass sie im Gegensatz zu einem gewöhnlichen Zahnrad zwei Zahnkränze aufweisen, die unterschiedliche Durchmesser haben. Das führt zu einer Über- oder Untersetzung des Drehmoments der Eingangswelle. Es kann also von Vorteil sein, solche Stufenräder in einer erfindungsgemäßen Küchenmaschine einzusetzen, weil durch sie in einfacher Weise oben genannte Untersetzungsfaktoren durch Variation der Zahnung und des Planetenraddurchmessers erreicht werden können.

In einer bevorzugten Ausführungsform umfasst das Getriebesystem ein Planetengetriebe in Wolfromanordnung. Wie weiter oben beschrieben sind Planetengetriebe in Wolfromanordnung dem Durchschnittsfachmann grundsätzlich bekannt. Bei ihnen werden bevorzugt Stufenräder eingesetzt, sodass durch die Verwendung eines Planetengetriebes in Wolfromanordnung in besonders günstiger Weise ein geeignetes Getriebesystem für eine erfindungsgemäße Küchenmaschine bereitgestellt werden kann.

In einer bevorzugten Ausführungsform umfasst das Getriebesystem ein Hohlrad, das eine Hohlwelle als abtriebsseitige Ausgangswelle trägt. Das Hohlrad kann mit den weiteren Zahnrädern des Getriebesystems in Arbeitsstellung stehen und somit ein Drehmoment vom Getriebesystem an die Hohlwelle übertragen. Bevorzugt umgibt die Hohlwelle die beiden weiteren Ausgangswellen des Getriebesystems der erfindungsgemäßen Küchenmaschine koaxial. So kann vorteilhafterweise neben den beiden dem Durchschnittsfachmann bereits von anderen Küchenmaschinen bekannten Ausgangswellen eine dritte Ausgangswelle koaxial zur Verfügung gestellt werden. Beispielsweise kann das Hohlrad um den kleineren von zwei Zahnkränzen an Stufenrädern des Getriebesystems kreisen.

In einer bevorzugten Ausführungsform weist das Hohlrad eine glockenartige Gestalt auf. Glockenartig im Sinne der Erfindung ist ein Hohlrad, das im Querschnitt betrachtet einen Abschnitt aufweist, in dem sich ein Zahnkranz befindet und dieser Abschnitt gegenüber einem anderen Abschnitt, der eine Hohlwelle bereitstellt, verbreitert ist, und zwar in der Form, dass der Abschnitt mit der Hohlwelle kuppelartig koaxial über dem Abschnitt mit dem Zahnkranz angeordnet ist. Dies kann den Vorteil mit sich bringen, dass das Hohlrad besonders einfach mit einer Hohlwelle als Ausgangswelle versehen sein kann. Trägt ein Hohlrad, das prinzipiell oberhalb des Innenzahnkranzes eine geschlossene Oberfläche aufweist, in deren Mitte koaxial eine Hohlwelle, ergibt sich diese beschriebene glockenartige Gestalt. Sie kann also besonders vorteilhaft sein, wenn man ein Hohlrad mit einer Hohlwelle als Ausgangswelle versehen möchte.

In einer bevorzugten Ausführungsform ist das Hohlrad mit der Hohlwelle gegenüber einem Getriebegehäuse des Getriebesystems und einem Planetenträger mittels eines ersten und eines zweiten Kugellagers in einer Ebene senkrecht zur Eingangswelle drehbar gelagert. Eine solche Lagerung kann vorteilhaft sein, um Reibung zwischen dem Hohlrad und anderen Teilen des Getriebesystems so gering wie möglich zu halten. Durch die Lagerung auf bzw. unter einem Kugellager kann sich der Vorteil ergeben, dass das Hohlrad und somit auch die Hohlwelle besonders leichtgängig rotieren. Folge davon kann sein, dass der Energieverbrauch der Küchenmaschine gesenkt wird und die Wirkung der Drehmomentübertragung verbessert ist.

In einer bevorzugten Ausführungsform ist die Küchenmaschine zur Nahrungsmittelverarbeitung geeignet. Dort können die genannten Vorteile und Eigenschaften der erfindungsgemäßen Küchenmaschine vorteilhaft zum Tragen kommen. Beispielsweise kann die Küchenmaschine ein Mixer, eine Multifunktionsküchenmaschine, ein Knetgerät, ein Rührgerät, ein Fleischwolf, ein Schneidgerät, ein Schlagsahnezubereitungsgerät, ein Stabmixer oder auch allgemein eine Standküchenmaschine sein, die zur Nahrungsmittelverarbeitung geeignet ist. In diesen Maschinen kann es für den Benutzer von großem Vorteil sein, drei Ausgangswellen in koaxialer Geometrie zur Verfügung zu haben. Dies kann ihm die Verarbeitung von Nahrungsmitteln stark vereinfachen. Alternativ kann die Küchenmaschine aber auch ein Kühlschrank, eine Gefriertruhe, eine Mikrowelle oder ein Müllschlucker sein.

Bei einer Verwendung eines Planetengetriebes in Wolfromanordnung in einer Küchenmaschine ist bevorzugt, dass das Wolfromgetriebe verwendet wird, um drei abtriebsseitige Ausgangswellen mit untereinander unterschiedlichen Untersetzungen in koaxialer Geometrie für Werkzeuge mit Instrumenten zur Nahrungsmittelbearbeitung bereitzustellen. Das kann den Vorteil mit sich bringen, dass der Benutzer auf eine Geschwindigkeitsregelung an der Küchenmaschine verzichten kann oder dass Werkzeuge eine geeignete Kuppelgeometrie aufweisen, sodass der Benutzer sie automatisch auf die geeignete der drei Ausgangswellen aufsteckt und somit nicht eine ungeeignete Rotationsgeschwindigkeit mit dem jeweiligen Werkzeug verwendet.

Bei der Verwendung eines Planetengetriebes in Wolfromanordnung in einer Küchenmaschine ist außerdem bevorzugt, dass das Planetengetriebe in Wolfromanordnung dazu verwendet wird, drei Werkzeuge zur Nahrungsmittelbearbeitung gleichzeitig in koaxialer Geometrie zu betreiben. Dies kann Bearbeitungsvorgänge an Nahrungsmitteln deutlich beschleunigen. Der Benutzer kann beispielsweise gleichzeitig mit dem Gerät rühren, schneiden und kneten, wenn er jeweils ein geeignetes Bearbeitungswerkzeug an jede der zur Verfügung stehenden Ausgangswellen anbringt.

### Kurzbeschreibung der Zeichnungen

Weitere vorteilhafte Ausgestaltungen der Erfindung werden nachfolgend anhand von in den Zeichnungen dargestellten Ausführungsbeispielen, auf welche die Erfindung jedoch nicht beschränkt ist, näher beschrieben.

Es zeigen schematisch:
- Fig. 1: einen Querschnitt durch einen Standfuß einer erfindungsgemäßen Küchenmaschine;
- Fig. 2: eine perspektivische Ansicht mit einem teilweisen Querschnitt durch ein Getriebesystem einer erfindungsgemäßen Küchenmaschine;
- Fig. 3: eine Explosionszeichnung eines Getriebesystems einer erfindungsgemäßen Küchenmaschine;
- Fig. 4a und Fig. 4b: zwei unterschiedliche perspektivische Ansichten eines Hohlrads für ein Getriebesystem einer erfindungsgemäßen Küchenmaschine;
- Fig. 5: eine schematische Querschnittszeichnung durch ein Getriebesystem für eine erfindungsgemäßen Küchenmaschine.

### Detaillierte Beschreibung von Ausführungen der Erfindung

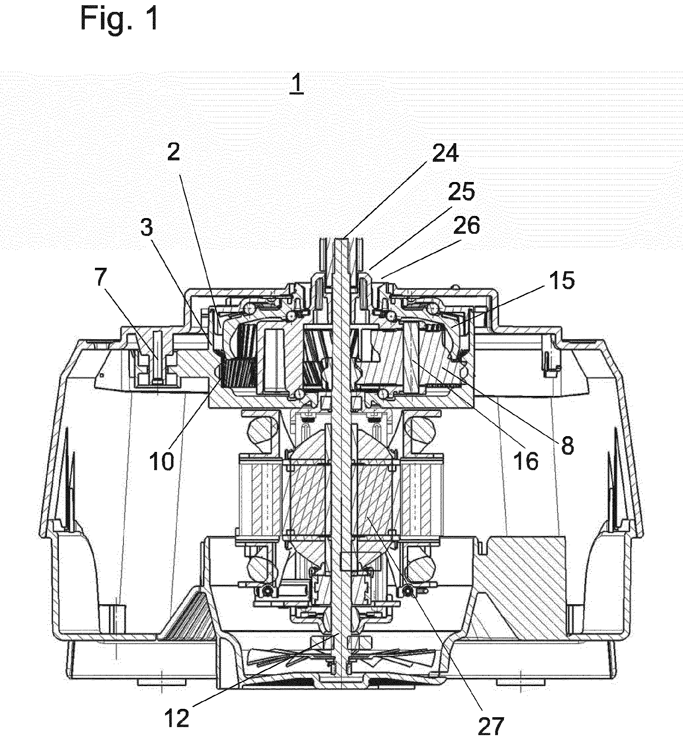

Figur 1 zeigt einen Querschnitt durch einen Standfuß einer erfindungsgemäßen Küchenmaschine (1). Die Küchenmaschine (1) umfasst im Standfuß ein Getriebesystem (2) mit einem Getriebegehäuse (3). Das Getriebegehäuse (3) umfasst einen Gehäuseboden (4) und einen Gehäusedeckel (5). Der Gehäuseboden (4) und der Gehäusedeckel (5) sind über Deckelbefestigungsbereiche (6) miteinander verbunden. Über Getriebegehäuseaufhängungspunkte (7) am Gehäuseboden (4) ist das Getriebegehäuse (3) wiederum mit dem Standfuß der Küchenmaschine (1) verbunden.

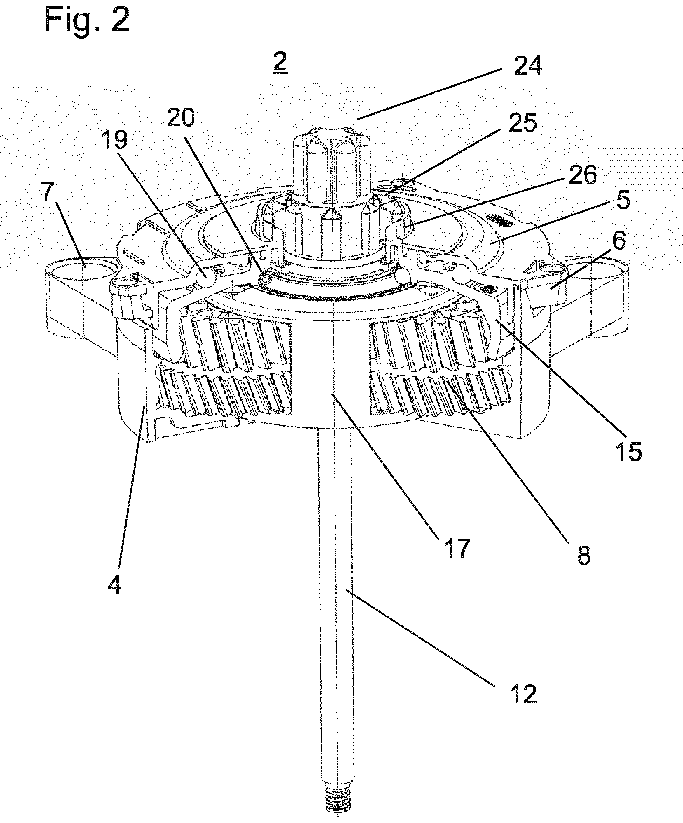

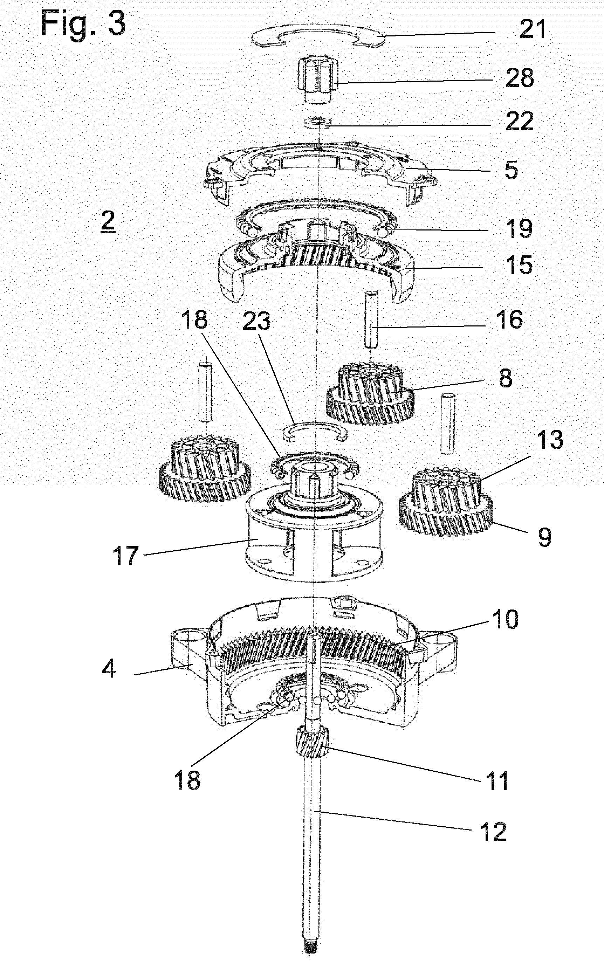

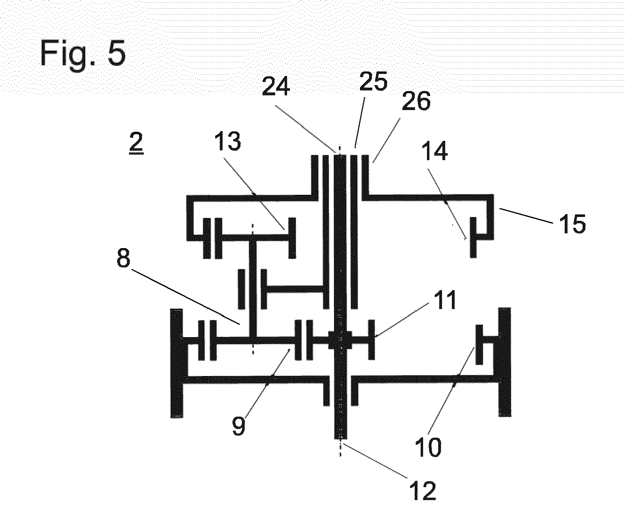

Das Getriebesystem (2) ist im vorliegenden Fall ein Untersetzungsgetriebe, genauer ein Planetengetriebe in Wolfromanordnung. Entsprechend umfasst das Getriebesystem (2), wie in den Figuren 2 und 3 gut zu erkennen ist, Planetenräder (8) in Form von Stufenrädern, deren erste Planetenradzahnstufe (9) mit einer Gehäusezahnung (10) des Gehäusebodens (4) und einem Sonnenrad (11) einer antriebsseitigen Eingangswelle (12) kämmt, und deren zweite Planetenradzahnstufe (13) mit einer Hohlradzahnung (14) eines dem Getriebegehäuse (3) gegenüber drehbar gelagerten Hohlrades (15) kämmt. Die Zahnkränze der ersten Planetenradzahnstufe (9) und der zweiten Planetenradzahnstufe (13) sind zueinander drehfest angeordnet. Entsprechend können die Planetenräder (8) jeweils einstückig gefertigt sein oder die erste Planetenradzahnstufen (9) und die zweite Planetenradzahnstufe (13) separat voneinander umfassen, wobei diese dann drehfest zu- oder aneinander befestigt sind. Das Sonnenrad (11) weist dreizehn Zähne auf, die erste Planetenradzahnstufe (9) zweiundvierzig, die zweite Planetenradzahnstufe (13) vierundzwanzig, die Gehäusezahnung (10) achtundneunzig und die Hohlradzahnung (14) achtundsechzig. Die Zahnkränze sind schrägverzahnt, um beispielsweise eine höhere Tragfähigkeit der Zahnkränze und einen ruhigeren Betrieb zu ermöglichen. Eine schematische Darstellung der Wirkverbindung der die verschiedenen Zahnkränze tragenden Getriebeteile ist in Figur 5 gezeigt.

Die Planetenräder (8) werden gegenüber dem Getriebegehäuse (3) durch Planetenradachsen (16) drehbar gehalten. Diese sind wiederum in einem Planetenträger (17) drehfest angeordnet. Ein erstes Kugellager (18) trägt den Planetenträger (17), sodass eine möglichst reibungsarme Rotation des Planetenträgers (17) senkrecht zur antriebsseitigen Eingangswelle (12) gegenüber dem Getriebegehäuse (3) ermöglicht wird. Ein zweites Kugellager (19) reduziert die Reibung zwischen dem Hohlrad (15) und dem Planetenträger (17) und ein drittes Kugellager (20) reduziert die Reibung zwischen dem Hohlrad (15) und dem Gehäusedeckel (5). Somit ist das Hohlrad (15) ebenfalls in einer Ebene senkrecht zur antriebsseitigen Eingangswelle (12) und gegenüber dem seinerseits drehbaren Planetenträger (17) und dem drehfesten Gehäusedeckel (5) reibungsarm drehbar gelagert. Ein erster Abdeckring (21), ein zweiter Abdeckring (22) und ein dritter Abdeckring (23), die koaxial zur antriebsseitigen Eingangswelle (12) angeordnet sind, reduzieren das freie Spiel der drei Kugellager (18, 19, 20) des Getriebesystems (2) um die antriebsseitige Eingangswelle (12).

Das Getriebesystem (2) weist drei Ausgangswellen in koaxialer Geometrie auf, eine erste abtriebsseitige Ausgangswelle (24), eine zweite abtriebsseitige Ausgangswelle (25) und eine dritte abtriebsseitige Ausgangswelle (26), erkennbar in den Figuren 1, 2, 3 und 5. Sie sind alle drei (24, 25, 26) gleichzeitig über das Getriebesystem (2) betreibbar und erlauben das gleichzeitige Verwenden von bis zu drei Werkzeugen. Im vorliegenden Ausführungsbeispiel ist die erste abtriebsseitige Ausgangswelle (24) ein von einem Motor (27) entferntes Ende der antriebsseitigen Eingangswelle (12). Die vom Motor (25) angetriebene antriebsseitige Eingangswelle (12) durchstößt das Getriebesystem (2) und stellt abtriebsseitig direkt eine Drehzahl von 10000 U/min für ein Werkzeug bereit, was der Drehzahl der antriebsseitigen Eingangswelle (12) entspricht und wodurch entsprechend auch das Drehmoment 1:1 übertragen wird. An dieser ersten abtriebsseitigen Ausgangswelle (24) können beispielsweise ein Rührer oder ein Schneebesen zum Einsatz kommen, die besonders von der hohen Drehzahl profitieren können. Ein Kupplungsstück (28), das zur Verbindung der ersten abtriebsseitigen Ausgangswelle (24) mit solchen Werkzeugen dient, ist in diesem Fall zweiteilig mit der ersten abtriebsseitigen Ausgangswelle (24) ausgeführt. Die zweite abtriebsseitige Ausgangswelle (25) und die dritte abtriebsseitige Ausgangswelle (26) werden über das Sonnenrad (11) und die Planetenräder (8) durch die antriebsseitige Eingangswelle (12) mit im Vergleich zu dieser verringerten Drehzahl, aber erhöhtem Drehmoment betrieben. Die Drehzahlen der zweiten abtriebsseitigen Ausgangswelle (25) und der dritten abtriebsseitigen Ausgangswelle (26) hängen von den weiter oben beschriebenen Zahnkranzkonfigurationen ab. An der zweiten abtriebsseitigen Ausgangswelle (25) wird im vorliegenden Fall eine Drehzahl von 1171 U/min bereitgestellt und an der dritten abtriebsseitigen Ausgangswelle (26) eine Drehzahl von 207 U/min. Die Untersetzung gegenüber der antriebsseitigen Eingangswelle beträgt also ungefähr 1:8,5 und 1:48. In Folge dessen kann an der zweiten abtriebsseitigen Ausgangswelle (25) beispielsweise besonders wirkungsvoll ein Knethaken und an der dritten abtriebsseitigen Ausgangswelle (26) beispielsweise besonders wirkungsvoll ein Fleischwolf betrieben werden, die von dem im Vergleich zur antriebsseitigen Eingangswelle erhöhten Ausgangsdrehmoment jeweils stark profitieren können.

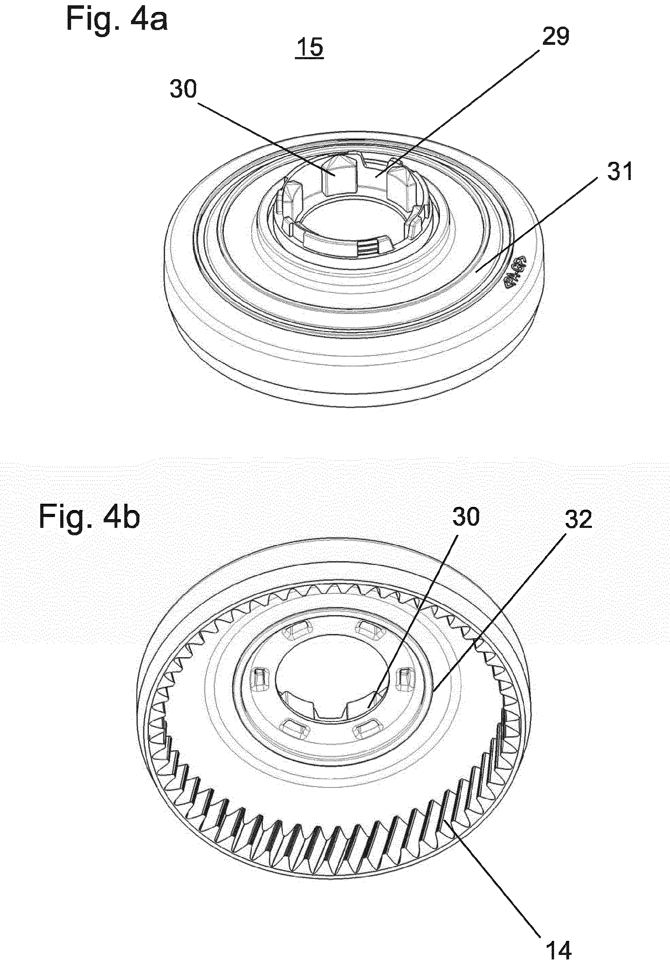

Während die erste abtriebsseitige Ausgangswelle (24) im vorliegenden Ausführungsbeispiel eine massive Welle ist, sind die zweite abtriebsseitige Ausgangswelle (25) und die dritte abtriebsseitige Ausgangswelle (26) im vorliegenden Ausführungsbeispiel Hohlwellen, damit sie die erste abtriebsseitige Ausgangswelle (24) wie voranstehend beschrieben koaxial umgeben können. Der Planetenträger (17) trägt die zweite abtriebsseitige Ausgangswelle (25). Das Hohlrad (15) trägt die dritte abtriebsseitige Ausgangswelle (26). Beides ist insbesondere in Figur 3 zu erkennen. In Figur 4a ist in der perspektivischen Ansicht von oben in einem Abschnitt des Hohlrades (15) eine Wandung (29) zu sehen, die die dritte abtriebsseitige Ausgangswelle (26) entsprechend als Hohlwelle auf dem Hohlrad (15) formt. An der Wandung (29) sind Zahnelemente (30) angeordnet, die zur Kopplung der genannten Werkzeuge an das Hohlrad (15) dienen. In einem anderen Abschnitt des Hohlrades (15) befindet sich die Hohlradzahnung (14), die mit den zweiten Planetenradzahnstufen (13) der Planetenräder (8) kämmt. In der perspektivischen Unteransicht des Hohlrades (15), die in Figur 4b dargestellt wird, ist die Hohlradzahnung (14) gut zu erkennen. Neben der dritten abtriebsseitigen Ausgangswelle (18) und der Hohlradzahnung umfasst das Hohlrad (12) eine erste Kugellagerschiene (31), um darin das zweite Kugellager (19) aufnehmen zu können, welches der möglichst reibungsarmen Rotation des Hohlrades (15) gegenüber dem Planetenträger (17) dient. Eine zweite Kugellagerschiene (32) an der Abdeckfläche des Hohlrades (15) dient als Lagerung für das dritte Kugellager (20), das der reibungsarmen Rotation des Hohlrades (12) gegenüber dem Gehäusedeckel (5) dient. Der Hohlradabschnitt mit der Hohlwelle und der Hohlradabschnitt mit der Hohlradzahnung (14) verleihen dem Hohlrad (15) im vorliegenden Ausführungsbeispiel eine glockenartige Gestalt.

Die Ausführungsbeispiele verdeutlichen, wie durch eine erfindungsgemäße Küchenmaschine (1) mit einem Getriebesystem (2) drei Ausgangswellen (24, 25, 26) in koaxialer Geometrie bereitgestellt werden. Wie gezeigt, können durch geeignete Untersetzungsfaktoren gleichzeitig abtriebsseitig mehrere unterschiedliche verringerte Drehzahlen und höhere Drehmomente im Verhältnis zur antriebsseitigen Eingangswelle (12) bereitgestellt werden. Dies kann besonders vorteilhaft durch den Einsatz eines Planetengetriebes in Wolfromanordnung, wie in den Figuren 1 bis 3 und schematisch in Figur 5 dargestellt, erreicht werden. Vorteilhaft kann dies insbesondere sein, wenn die Küchenmaschine (1) eine Küchenmaschine (1) zur Nahrungsmittelverarbeitung ist und somit eine Vielzahl von auswechselbaren Werkzeugen mit unterschiedlichen Anforderungen an Drehzahl und Drehmoment zum Einsatz kommen sollen.

### Bezugszeichenliste

- 1: Küchenmaschine
- 2: Getriebesystem
- 3: Getriebegehäuse
- 4: Gehäuseboden
- 5: Gehäusedeckel
- 6: Deckelbefestigungsbereich
- 7: Getriebegehäuseaufhängungspunkt
- 8: Planetenrad
- 9: erste Planetenradzahnstufe
- 10: Gehäusezahnung
- 11: Sonnenrad
- 12: antriebsseitige Eingangswelle
- 13: zweite Planetenradzahnstufe
- 14: Hohlradzahnung
- 15: Hohlrad
- 16: Planetenradachse
- 17: Planetenträger
- 18: erstes Kugellager
- 19: zweites Kugellager
- 20: drittes Kugellager
- 21: erster Abdeckring
- 22: zweiter Abdeckring
- 23: dritter Abdeckring
- 24: erste abtriebsseitige Ausgangswelle
- 25: zweite abtriebsseitige Ausgangswelle
- 26: dritte abtriebsseitige Ausgangswelle
- 27: Motor
- 28: Kupplungsstück
- 29: Wandung
- 30: Zahnelement
- 31: erste Kugellagerschiene
- 32: zweite Kugellagerschiene

## Patentansprüche

1. Küchenmaschine (1) mit einem Getriebesystem (2) mit einer antriebsseitigen Eingangswelle (12), deren Drehmoment über das Getriebesystem (2) an mehrere abtriebsseitige Ausgangswellen (24, 25, 26) übertragen werden kann, wobei das Getriebesystem (2) drei abtriebsseitige Ausgangswellen (24, 25, 26) in koaxialer Geometrie aufweist, **dadurch gekennzeichnet, dass** das Getriebesystem (2) ein Planetengetriebe mit einem gegenüber einem Getriebegehäuse (3) des Getriebesystems (2) drehbar gelagerten Planetenträger (17) umfasst und dass das Getriebesystem (2) ein Hohlrad (15) umfasst, das eine Hohlwelle als abtriebsseitige Ausgangswelle (26) trägt, wobei das Hohlrad (15) mit der Hohlwelle gegenüber dem Getriebegehäuse (3) drehbar gelagert ist.

2. Küchenmaschine (1) nach Anspruch 1, **dadurch gekennzeichnet, dass** das Getriebesystem (2) ein Untersetzungsgetriebe ist.

3. Küchenmaschine (1) nach einem der vorhergehenden Ansprüche, **dadurch gekennzeichnet, dass** die abtriebsseitigen Ausgangswellen (24, 25, 26) jeweils unterschiedliche Untersetzungen aufweisen.

4. Küchenmaschine (1) nach einem der vorhergehenden Ansprüche, **dadurch gekennzeichnet, dass** das Getriebesystem (2) abtriebsseitig Untersetzungsfaktoren kleiner als 10 und kleiner als 60 im Verhältnis zur Drehzahl der antriebsseitigen Eingangswelle (12) bereitstellt.

5. Küchenmaschine (1) nach einem der vorhergehenden Ansprüche, **dadurch gekennzeichnet, dass** die abtriebsseitigen Ausgangswellen (24, 25, 26) gleichzeitig betreibbar sind.

6. Küchenmaschine (1) nach einem der vorhergehenden Ansprüche, **dadurch gekennzeichnet, dass** die Planetenräder (8) Stufenräder sind.

7. Küchenmaschine (1) nach einem der vorhergehenden Ansprüche, **dadurch gekennzeichnet, dass** das Getriebesystem (2) ein Planetengetriebe in Wolfromanordnung umfasst.

8. Küchenmaschine (1) nach einem der vorhergehenden Ansprüche, **dadurch gekennzeichnet, dass** das Hohlrad (15) eine glockenartige Gestalt aufweist.

9. Küchenmaschine (1) nach einem der vorhergehenden Ansprüche, **dadurch gekennzeichnet, dass** das Hohlrad (15) mit der Hohlwelle gegenüber einem Getriebegehäuse (3) des Getriebesystems (2) und einem Planetenträger (17) mittels Kugellagern (19, 20) in einer Ebene senkrecht zur antriebsseitigen Eingangswelle (12) drehbar gelagert ist.

10. Küchenmaschine (1) nach einer der vorhergehenden Ansprüche, **dadurch gekennzeichnet, dass** die Küchenmaschine (1) zur Nahrungsmittelverarbeitung geeignet ist.

11. Verwendung eines Planetengetriebes in Wolfromanordnung in einer Küchenmaschine.
**dadurch gekennzeichnet, dass** das Wolfromgetriebe verwendet wird, um drei abtriebsseitige Ausgangswellen (24, 25, 26) mit untereinander unterschiedlichen Untersetzungen in koaxialer Geometrie für Werkzeuge mit Instrumenten zur Nahrungsmittelbearbeitung bereitzustellen.

12. Verwendung nach Anspruch 11, **dadurch gekennzeichnet, dass** das Planetengetriebe in Wolfromanordnung dazu verwendet wird, drei Werkzeuge zur Nahrungsmittelbearbeitung gleichzeitig in koaxialer Geometrie zu betreiben.

## Claims

1. Kitchen machine (1) with a transmission system (2) with a drive-side input shaft (12), the torque of which can be transmitted to a plurality of output-side output shafts (24, 25, 26) via the transmission system (2), wherein the transmission system (2) has three output-side output shafts (24, 25, 26) in coaxial geometry, **characterised in that** the transmission system (2) comprises a planetary gear with a rotatably mounted planet carrier (17) opposite a transmission housing (3) of the transmission system (2) and that the transmission system (2) comprises a ring gear (15) with a hollow shaft as an output-side output shaft (26), wherein the ring gear (15) is rotatably mounted with the hollow shaft opposite the transmission housing (3).

2. Kitchen machine (1) according to claim 1, **characterised in that** the transmission system (2) is a reduction gear.

3. Kitchen machine (1) according to one of the preceding claims, **characterised in that** the output-side output shafts (24, 25, 26) each have different reductions.

4. Kitchen machine (1) according to one of the preceding claims, **characterised in that** on the output side the transmission system (2) provides scaling factors smaller than 10 and smaller than 60 in relation to the rotational speed of the input shaft on the drive side (12).

5. Kitchen machine (1) according to one of the preceding claims, **characterised in that** the output-side output shafts (24, 25, 26) can be operated simultaneously.

6. Kitchen machine (1) according to one of the preceding claims, **characterised in that** the planetary gears (8) are stepped gears.

7. Kitchen machine (1) according to one of the preceding claims, **characterised in that** the transmission system (2) comprises a planetary gear in Wolfrom arrangement.

8. Kitchen machine (1) according to one of the preceding claims, **characterised in that** the ring gear (15) has a bell-like shape.

9. Kitchen machine (1) according to one of the preceding claims, **characterised in that** the ring gear (15) is rotatably mounted with the hollow shaft opposite a transmission housing (3) of the transmission system (2) and a planet carrier (17) by means of ball bearings (19, 20) in a plane perpendicular to the input shaft on the drive side (12).

10. Kitchen machine (1) according to one of the preceding claims, **characterised in that** the kitchen machine (1) is suitable for food processing.

11. Use of a planetary gear in Wolfrom arrangement in a kitchen machine, **characterised in that** the Wolfrom gear is used to provide three output-side output shafts (24, 25, 26) with mutually different reductions in coaxial geometry for tools with instruments for food processing.

12. Use according to claim 11, **characterised in that** the planetary gear in Wolfrom arrangement is used to simultaneously operate three tools for food processing in coaxial geometry.

## Revendications

1. Appareil de cuisine (1) avec un système de transmission (2) doté d'un arbre d'entrée côté menant (12), dont le couple est transmissible via le système de transmission (2) à plusieurs arbres de sortie côté mené (24, 25, 26), dans lequel le système de transmission (2) présente trois arbres de sortie côté mené (24, 25, 26) en géométrie coaxiale, **caractérisé en ce que** le système de transmission (2) englobe un train épicycloïdal avec un porte-satellites (17) logé en rotation par rapport à un carter d'engrenage (3) du système de transmission (2) et **en ce que** le système de transmission (2) englobe une roue à denture intérieure (15), qui porte un arbre creux servant d'arbre de sortie côté mené (26), dans lequel la roue à denture intérieure (15) est logée en rotation avec l'arbre creux par rapport au carter d'engrenage (3).

2. Appareil de cuisine (1) selon la revendication 1, **caractérisé en ce que** le système de transmission (2) est un démultiplicateur de vitesse.

3. Appareil de cuisine (1) selon l'une des revendications précédentes, **caractérisé en ce que** les arbres de sortie côté mené (24, 25, 26) présentent respectivement des démultiplications différentes.

4. Appareil de cuisine (1) selon l'une des revendications précédentes, **caractérisé en ce que** le système de transmission (2) fournit côté mené des facteurs de démultiplication inférieurs à 10 et inférieurs à 60 par rapport à la vitesse de rotation de l'arbre d'entrée côté menant (12).

5. Appareil de cuisine (1) selon l'une des revendications précédentes, **caractérisé en ce que** les arbres de sortie côté mené (24, 25, 26) sont exploitables simultanément.

6. Appareil de cuisine (1) selon l'une des revendications précédentes, **caractérisé en ce que** les roues planétaires (8) sont des roues étagées.

7. Appareil de cuisine (1) selon l'une des revendications précédentes, **caractérisé en ce que** le système de transmission (2) englobe un train épicycloïdal en disposition Wolfrom.

8. Appareil de cuisine (1) selon l'une des revendications précédentes, **caractérisé en ce que** la roue à denture intérieure (15) présente une forme de cloche.

9. Appareil de cuisine (1) selon l'une des revendications précédentes, **caractérisé en ce que** la roue à denture intérieure (15) est logée en rotation avec l'arbre creux par rapport à un carter d'engrenage (3) du système de transmission (2) et un porte-satellites (17) est logé en rotation au moyen de roulements à billes (19, 20) dans un plan perpendiculaire à l'arbre d'entrée côté menant (12).

10. Appareil de cuisine (1) selon l'une des revendications précédentes, **caractérisé en ce que** l'appareil de cuisine (1) est un appareil de cuisine servant à transformer les denrées alimentaires.

11. Utilisation d'un train épicycloïdal en disposition Wolfrom dans un appareil de cuisine, **caractérisée en ce que** la transmission Wolfrom est utilisée afin de fournir trois arbres de sortie côté mené (24, 25, 26), avec des démultiplications différentes entre elles, en géométrie coaxiale, pour des outils présentant des instruments servant à transformer des denrées alimentaires.

12. Utilisation selon la revendication 11, **caractérisée en ce que** le train épicycloïdal en disposition Wolfrom est utilisé afin d'exploiter simultanément en géométrie coaxiale trois outils servant à transformer des denrées alimentaires.
